(19) Europäisches Patentamt
European Patent Office
Office européen des brevets

(11) **EP 3 407 154 A1**

(12) **EUROPEAN PATENT APPLICATION**

(43) Date of publication:
**28.11.2018 Bulletin 2018/48**

(51) Int Cl.:
*G05D 23/13* (2006.01)   *E03C 1/05* (2006.01)
*E03C 1/00* (2006.01)

(21) Application number: **18000082.0**

(22) Date of filing: **01.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **25.05.2017 CN 201710379097**

(71) Applicant: **Xiamen Solex High-tech Industries Co., Ltd.**
**361000 Fujian (CN)**

(72) Inventors:
• **DAN, Tangjun**
  **Fujian 361000 (CN)**
• **HU, Lihong**
  **Fujian 361000 (CN)**
• **CHEN, Xiaobing**
  **Fujian 361000 (CN)**

(74) Representative: **Verscht, Thomas Kurt Albert**
**Josephsburgstrasse 88 A**
**81673 München (DE)**

(54) **AN ELECTRONIC INTELLIGENT WATER OUTLET CONTROL SYSTEM**

(57) The present invention provides an electronic intelligent water outlet control system comprising: a controller and a control panel; the controller comprises a cold water inlet end and a hot water inlet end, the, cold water and the hot water flow through said cold water inlet end and hot water inlet end respectively into two chambers of a pressure balance valve; the two chambers of the pressure balance valve respectively flow into the mixing water chamber of the temperature control valve through the cold water inlet and the hot water inlet,the temperature control valve is regulated by the first stepping motor to regulate the water passing area of the cold water inlet and hot water inlet ;the temperature control valve also includes a mixed water outlet connected to the flow control valve; the flow control valve includes a pilot valve and a second stepping motor, the pilot valve outlet is connected to the first water outlet end and the second outlet end,the first outlet end and the second outlet end are respectively provided with an electromagnetic valve to control the opening or closing of the the first outlet end and the second outlet end.The invention provides an electronic intelligent water outlet control system, which is compact and can adjust the water flow and water temperature accurately, and is convenient for users to use.

FIG.1

**Description**

FIELD OF INVENTION

The present invention relates to a shower, and more particularly to a shower controller.

BACKGROUND OF INVENTION

The traditional shower room, mostly mechanical switches are used to adjust water inlet and water outlet amount, water temperature and water outlet terminal . Mechanical adjustment is not intuitive, and the regulation is not accurate enough, if the user forces too large or too small, it will cause excessive flow or temperature changes, which can not meet the purpose of precise adjustment.

In order to solve this problem, in the market an electronic controller is appeared , through a control box, in the control box the water temperature and flow control adjustment is completed , then the control box and the water terminal is connected. And the user only need to press the button on the control box, the user can adjust the water temperature and flow,in this electronic adjustment, temperature and flow can increase with the number of operations of the user, so that you can achieve the purpose of accurate adjustment.

However, there are many problem in this adjustment method, such as more buttons, poor visibility, inconvenient operation in the shower process.

SUMMARY OF THE INVENTION

The main technical problem to be solved by the invention is to provide an electronic intelligent water outlet control system which is compact and can adjust the flow and water temperature accurately and is convenient for users to use.

In order to solve the above-mentioned technical problems, the present invention provides An electronic intelligent water outlet control system, comprising: a controller and a control panel;

said controller comprises a cold water inlet end and hot water inlet end, the cold water and the hot water flow through said cold water inlet end and hot water inlet end respectively into two chambers of a pressure balance valve;

the two chambers of the pressure balance valve respectively flow into the mixing water chamber of the temperature control valve through the cold water inlet and the hot water inlet, the temperature control valve is regulated by the first stepping motor to regulate the water passing area of the cold water inlet and hot water inlet so as to adjust the proportion of hot and cold water in the mixing water chamber;

the temperature control valve further comprises a mixed water outlet connected to the flow control valve; the flow control valve comprises a pilot valve and a second stepping motor, the second stepping motor adjusts the water passing area of the pilot valve outlet;

the pilot valve outlet is connected to the first water outlet end and the second outlet end; the first outlet end and the second outlet end are respectively provided with an electromagnetic valve to control the opening or closing of the the first outlet end and the second outlet end;

the control panel sends a water terminal selection signal to the controller, the controller generates an electrical signal to control the open of the first water outlet terminal or the second water outlet terminal ; the control panel also sends a temperature adjustment signal and the flow rate adjustment signal to the the controller, the controller generates an electrical signal to control the first stepping motor ,the second stepping motor is rotated an angle so that the outlet water temperature of the mixed water outlet of the temperature control valve is increased or decreased and the outlet water flow of the flow control valve is increased or decreased;

the cold water inlet and the hot water inlet are respectively provided with a temperature sensor for detecting the water temperature of the cold water and the hot water. When the controller receives the temperature adjustment signal; the proportion of the cold water and the hot water is calculated according to the water temperature of the cold water and the hot water when the temperature of the mixed water outlet water reach the requirement of the temperature regulation signal ,and then the first stepper motor rotation corresponding angle is in control;

the proportion of cold water and hot water is calculated as follows:

$$M_{cold} / M_{hot} = (T_{hot}-T_{out}) / (T_{out}-T_{cold})$$

wherein $M_{cold}$ and $M_{hot}$ is the total amount of cold water inlet and the total amount of hot water inlet, $T_{hot}$, $T_{cold}$ and $T_{out}$ are respectively the temperature of the hot water inlet , the temperature of the cold water inlet and the temperature of mixed water outlet required by the temperature regulation signal .

In a preferred embodiment: said temperature control valve comprises a nested set regulating member and a nested set fixing member, said regulating member is moved along the axial direction of the fixing member with respect to the fixing member by the action of the first step motor ;and the side walls of the regulating member and the fixing member are provided with two water passages; and the water inlet of the regulating member and the fixing member are communicated with each other to form the cold water inlet and the hot water inlet; and when the regulating member is moved in the axial direction with respect to the fixing member, the area where the water inlet of the regulating member and the water inlet of the fixing member coincide are changed so that the water passing area of the cold water inlet and the hot water inlet changes.

In a preferred embodiment: said pressure balance valve includes a stationary member and a moving member,the stationary member has a cavity , the side wall of the stationary member has an opening communicating with the cavity ;said moving member is disposed within the cavity, divide the cavity into said two chambers, and an over-flow port is formed between the upper end of the moving member and the upper surface of the open end, and an over-flow port is formed between the lower end of the moving member and the lower surface of the open end;

When the cold water and the hot water flow into the two chambers, the cold water and the hot water in the chamber respectively apply pressure in the opposite direction to the moving member, and when the two pressures are not equal, the moving member moves to the side which the water pressure is higher; the over-flow port of the chamber with a large pressure becomes smaller and the over-flow port of the chamber with a small pressure becomes larger, so that the two chambers are returned to the equilibrium state.

In a preferred embodiment: said pilot valve includes a water blocking plug disposed coaxially with the water outlet of said pilot valve, when said second stepping motor is rotated, the second stepping motor output shaft is moved axially toward the direction of the water blocking plug, and the ejection force generated between the second stepping motor and the water blocking plug urges the water blocking plug to extend axially into the water outlet; the outer periphery of said water blocking plug has a circular mesa and the distance between said circular mesa and said water outlet is reduced as the water blocking plug extends into said water outlet so that the water passing area of said water outlet is reduced.

In a preferred embodiment: the mixed water outlet is also provided with a temperature sensor

In a preferred embodiment: said controller is mounted outside and comprises an outer housing; said control panel is provided in the surface of the outer housing.

In a preferred embodiment: the housing is further provided with a built-in power supply for supplying power to the controller and the control panel.

In a preferred embodiment: said controller is mounted in a concealed manner, the control panel is provided separately from the controller, and the controller and the control panel are electrically connected by wires.

In a preferred embodiment: said controller is electrically connected to the city electricity.

Compared with the prior art, the technical proposal of the invention has the following beneficial effects:

1.The invention provides an electronic intelligent water outlet control system which is divided into a controller and a control panel. The user can realize the adjustment of the water temperature and the flow rate by operating the control panel. The whole process is the visual operation, simple and intuitive, operating logic is clear . While the controller and control panel are separately set, it can realize the concealment of the controller, the walls is only left the control panel, very simple and generous, but also more beautiful. It is also possible to replace the conventional shower controller with the above-mentioned electronic intelligent water outlet control system by integrating the control panel and the controller as a whole, and the controller is installed in such a way that it does not destroy the installation wall of the original waterway .

2. The present invention provides an electronic intelligent water outlet control system in which a controller is provided with a pressure balance valve at the inlet side of the cold water and the hot water ,so that regardless of the existence of water pressure imbalance in the inlet side of the cold water and hot water , the water pressure from cold water and hot water out of the balance valve can be in the same state. In the follow-up temperature adjustment of the temperature control valve, the water pressure of the cold water inlet and hot water inlet in the temperature control valve into is roughly the same, therefore so long as the water passing area of cold water inlet and hot water inlet of the temperature control valve changes, it can effectively change the proportion of hot and cold water in the mixing water chamber, and further change the water temperature of mixed water.

3. The invention provides an electronic intelligent water outlet control system which uses a stepping motor to drive the temperature control valve and the flow control valve to rotate. The temperature and flow adjustment accuracy is relatively high, the adjustment speed is relatively fast. And with this structure, the current required to drive the stepper motor is relatively small, and the controller can perform the above-mentioned control process even if the built-in power supply is used. The traditional controller needs to connect to the city electricity, and there are some hidden dangers in the shower with heavier water vapor,The invention can avoid this drawback. In contrast, the control panel can also use the built-in battery mode, or take power from the controller.

Description of the drawings

Figure 1 is a structure diagram of a controller according to the preferred embodiment 1 of the present invention;

Figure 2 is a schematic view of the state of the pressure balance valve in the preferred embodiment 1 of the present invention when the hot water inlet and the cold water inlet are both effective;

Figure 3 is a schematic view of the state of the pressure balance valve in the preferred embodiment 1 of the present invention when the hot water inlet and the cold water inlet are both ineffective;

Figure 4 and Figure 5 are schematic views of the adjustment process of the temperature control valve in the preferred embodiment 1 of the present invention;

Figure 6 and Figure 7 are schematic views of the adjustment process of the flow control valve in the preferred embodiment 1 of the present invention;

Fig. 8 is a schematic view of showing the installation of the outlet control system when it is in a concealed way in the preferred embodiment 2 of the present invention .

DETAILED DESCRIPTION OF THE PREFERRED EMBODIMENTS

The invention will now be described in further detail with reference to the accompanying drawings and specific embodiments.

Embodiment 1

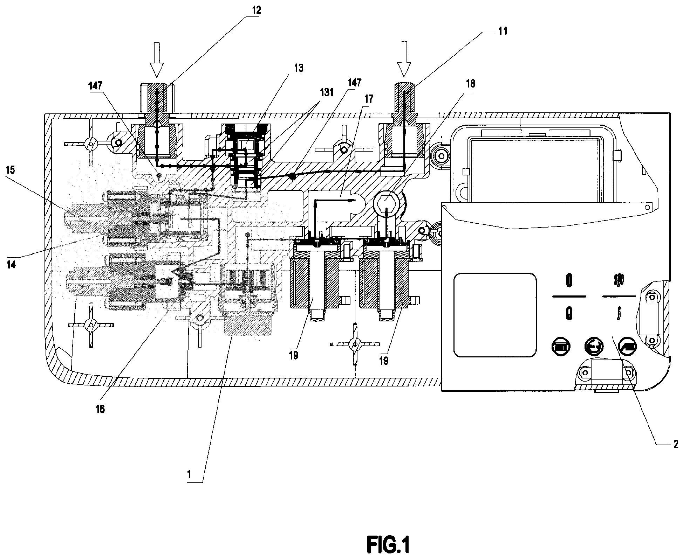

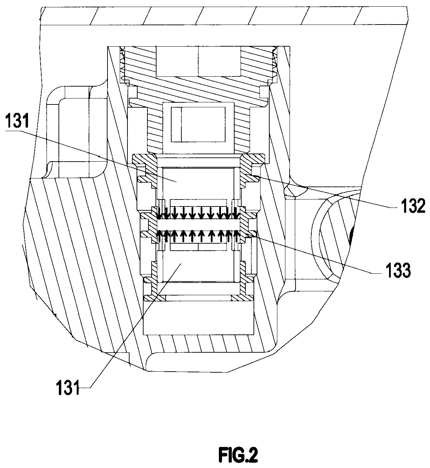

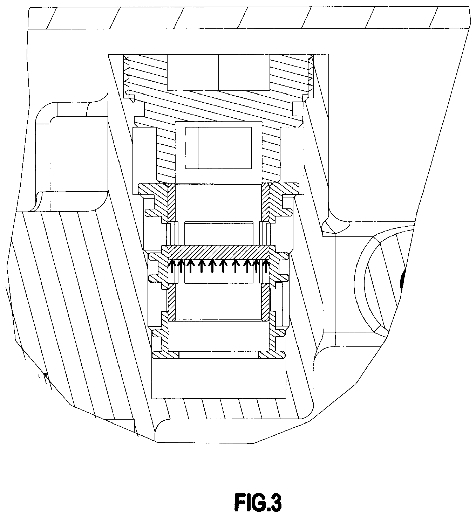

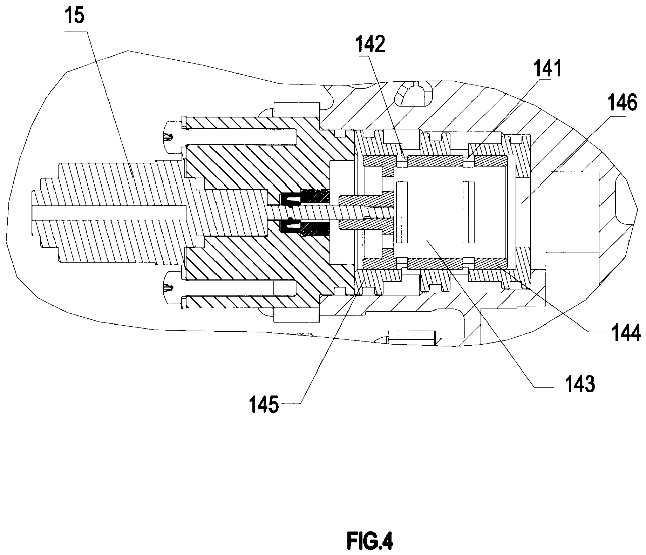

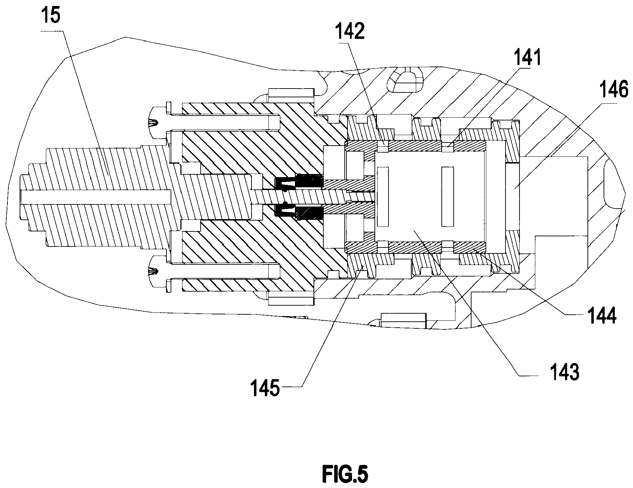

A shower control system includes a controller 1 and a control panel 2;
Referring to FIG.1, the controller 1 comprises a cold water inlet end 11 and a hot water inlet end 12 ,the cold water and hot water flow into the two chambers 131 of the pressure balance valve 13 via the cold water inlet end 11 and the hot water inlet end 12 respectively;
the two chambers 131 of the pressure balance valve 13 flow into the mixing water chamber 143 of the temperature control valve 14 through the cold water inlet 141 and the hot water inlet 142, respectively, and the temperature control valve 14 is controlled by the first stepping motor 15 ,the ratio of the hot and cold water in the mixed water chamber 143 is adjusted by adjusting the water passing area of the cold water inlet 141 and the hot water inlet 142;
the controller 1 is provided with a pressure balance valve 13 at the cold water inlet end 11 and the hot water inlet end 12,so that regardless of the existence of water pressure imbalance in the cold water inlet end 11 and the hot water inlet end 12 , the water pressure from cold water and hot water out of the balance valve 13 can be in the roughly same state; so that in the follow-up temperature adjustment of the temperature control valve 14 ,the pressure of the water flowing in the hot water inlet 141 and the hot water inlet 142 in the temperature control valve 14 is roughly the same, therefore as long as the water passing area of the cold water inlet 141 and the hot water inlet 142 of the temperature control valve 14 changes, the propotion of the hot and cold water in the mixed water chamber 143 can be effectively changed, and the water temperature of the mixed water can be further changed.
The temperature control valve 14 also includes a mixed water outlet 146 which communicates with the flow regulating valve 16, and the flow regulating valve 16 includes a pilot valve 161 and a second stepping motor 162, and the second stepping motor 162 adjusts the water passing area of the outlet port 164 of the pilot valve 161;
the outlet port 164 of the pilot valve 161 is communicated to the first water outlet end 17 and the second water outlet end 18; the first water outlet end 17 and the second water outlet end 18 are provided with a electromagnetic valve 19 for controlling the opening or closing of it , respectively; in the present embodiment, the first water outlet end 17 is connected to the hand shower, and the second outlet end is connected to the top spray shower; if the user's shower room also has a bathtub, the controller 1 may be provided with a third water outlet which is connected to the bathtub, which is a simple modification of the above-described embodiments, and will not be described again.
Referring to FIG. 2-3, said pressure balance valve 13 includes a stationary member 132 and a moving member 133,the stationary member 132 has a cavity , the side wall of the stationary member 132 has an opening communicating with the cavity ;said moving member 133 is disposed within the cavity, divide the cavity into said two chambers 131 ,and an over-flow port is formed between the upper end of the moving member and the upper surface of the open end, and an over-flow port is formed between the lower end of the moving member and the lower surface of the open end;
when the cold water and the hot water flow into the two chambers 131, the cold water and the hot water in the chamber respectively apply pressure in the opposite direction to the moving member 133, and when the two pressures are not equal, the moving member 133 moves to the chamber 131 which the water pressure is higher; the over-flow port of the chamber 131 with a large pressure becomes smaller and the over-flow port of the chamber 131 with a small pressure becomes larger, so that the two chambers 131 are returned to the equilibrium state.
Therefore, when there is no hot water inflow at the hot water inlet end 12, the moving member 133 is moved toward the corresponding chamber 131 of the cold water inlet end 11 until the overcurrent port of the chamber 131 is blocked ,vice versa. Thus, when the hot water inlet end 12 or the cold water inlet end 11 is deactivated, there is no water flowing into the temperature control valve 14 in the pressure balance valve 13,thereby preventing pure water or pure hot water from flowing out and causing damage to the user.
Referring to Figures 4-5, said temperature control valve 14 comprises a nested set regulating member 144 and a nested set fixing member 145, said regulating member 144 is moved along the axial direction of the fixing member 145 with respect to the fixing member 145 by the action of the first step motor 15; and the side walls of the regulating member 144 and the fixing member 145 are provided with two water passages; and the water inlet of the regulating member 144 and the fixing member 145 are communicated with each other to form the cold water inlet 141 and the hot water inlet 142; and when the regulating member 144 is moved in the axial direction with respect to the fixing member 145, the area where the water inlet of the regulating member 144 and the water inlet of the fixing member 145 coincide are changed so that the water passing area of the cold water inlet and the hot water inlet changes.Thereby the proportion of hot and cold water in the mixing water chamber 143 is changed.

In order to realize that the controller can precisely adjust the proportion of hot and cold water in the mixing water chamber 143, a cold water inlet 141 and a hot water inlet 142 are provided with a temperature sensor 147 through which the cold water inlet temperature and hot water inlet temperature can be detected.

When the cold water and hot water mixed, the cold water temperature increases, the temperature of hot water decreases, so the heat Q absorbed by cold water should be equal to the heat Q released by hot water so there are:

$$Q=CM_{cold}(T_{out}-T_{cold})=CM_{hot}(T_{hot}-T_{out})$$

wherein $M_{cold}$ and $M_{hot}$ is the total amount of cold water and the total amount of hot water , C is the specific heat capacity, $T_{hot}$, $T_{cold}$ and $T_{out}$ are respectively the temperature of the hot water inlet , the temperature of the cold water inlet and the temperature of mixed water outlet required by the temperature regulation signal.

The above formula can be further modified as: $M_{cold} / M_{hot} = (T_{hot}-T_{out})/(T_{out}-T_{cold})$. In this way, the proportion of the total amount of cold water and the hot water in the mixed water chamber 143 is calculated, and the controller controls the first stepper motor 15 to rotate according to the ratio, so as to achieve the purpose of accurately adjusting the water temperature. Compared with the traditional use of temperature package to adjust the temperature ,in this embodiment it is the active thermostat and is faster and more accurate than passive thermostat.

In addition, according to a certain system of products, water outlet formula:

$M = K\sqrt{P}$ , where K is the system hydraulic coefficient, P is the water pressure of water outlet.it can be obtained a certain system (that is, stereotypes products), hydraulic coefficient K is constant, the amount of the water outlet M is proportional to the square root of the pressure P .Therefore, under different water pressure, the ratio of cold water to hot water is equal , and the adjustment mode is not affected by changes of water pressure and has wide applicability.

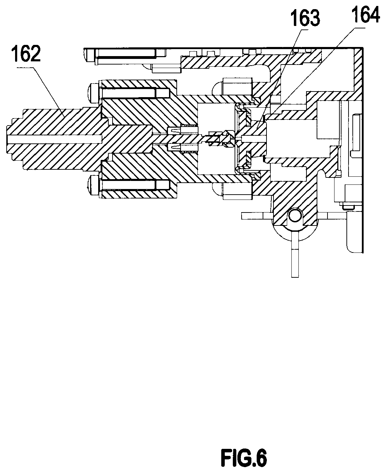

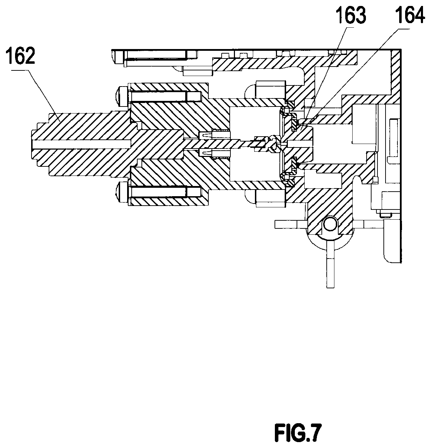

Referring to Figures 6-7, said pilot valve 161 includes a water blocking plug 163 disposed coaxially with the water outlet of said pilot valve 161, when said second stepping motor 162 is rotated, the second stepping motor 162 output shaft is moved axially toward the direction of the water blocking plug 163, and the ejection force generated between the second stepping motor 162 and the water blocking plug 163 urges the water blocking plug 163 to extend axially into the water outlet 164 ; the outer periphery of said water blocking plug 163 has a circular mesa and the distance between said circular mesa and said water outlet is reduced as the water blocking plug 163 extends into said water outlet 164 so that the water passing area of said water outlet 164 is reduced. This will achieve the purpose of flow regulation.

The cold water inlet 141, the hot water inlet 142, and the mixed water outlet 146 are respectively provided with a temperature sensor.

The above-mentioned electronic intelligent water control system which uses a stepping motor to drive the temperature control valve and the flow control valve to rotate. The temperature and flow adjustment accuracy is relatively high, the adjustment speed is relatively fast. And with this structure, the current required to drive the stepper motor is relatively small, and the controller can perform the above-mentioned control process even if the built-in power supply is used. The traditional controller needs to connect to the city electricity, and there are some hidden dangers in the shower with heavier water vapor,the invention can avoid this drawback. In contrast, the control panel 2 can also use the built-in battery mode, or take power from the controller. Therefore, by integrating the control panel 2 and the controller 1, the controller 1 is mounted in such a manner that the conventional shower controller is replaced with the above-described electronic intelligence water control system without damaging the mounting wall of the original waterway . So that the cost of replace is very low, those who have completed the renovation can also choose to use the electronic intelligent water control system.

In the present embodiment, the control panel is provided on the surface of the controller ,and has several discrete buttons, and when the user presses a different button, the control panel 2 sends an input signal to the controller, and the signal is transferred to the electrical signal of controlling the first stepping motor, the second stepper motor, the electromagnetic valve , so you can achieve the adjustment of water temperature, flow, water terminal.

Embodiment 1

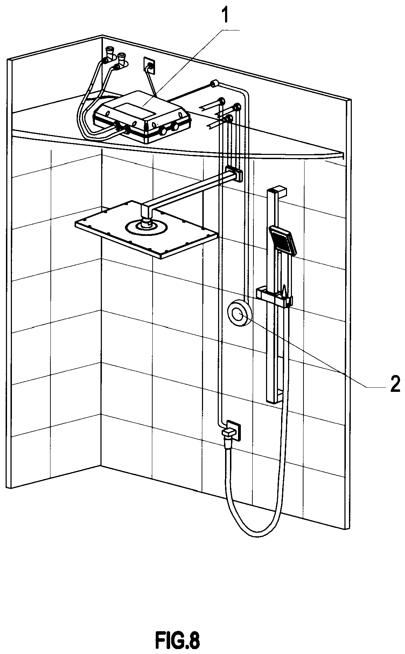

Referring to Fig. 8, in the present embodiment, the controller 1 is provided separately from the control panel 2, and the controller 1 is mounted in a concealed manner. This way is suitable for new home installation of the user, you can hide the controller 1, save the shower room space, also makes the whole shower room more simple and beautiful.

When the controller 1 is mounted in a concealed manner, the control panel 2 is mounted on the wall and electrically connected to the controller 1. The control panel 2 can be powered by the controller 1, or the control panel itself has a built-in power supply.

The present invention may be summarized as follows: The present invention provides an electronic intelligent water outlet control system comprising: a controller and a control panel; the controller comprises a cold water inlet end and a hot water inlet end, the, cold water and the hot water flow through said cold water inlet end and hot water inlet end respectively into two chambers of a pressure balance valve; the two chambers of the pressure balance valve respectively flow into the mixing water chamber of the temperature control valve through the cold water inlet and the hot water inlet,the temperature control valve is regulated by the first stepping motor to regulate the water passing area of the cold water inlet and hot water inlet ;the temperature control valve also includes a mixed water outlet connected to the flow control valve; the flow control valve includes a pilot valve and a second stepping motor, the pilot valve outlet is connected to the first water outlet end and the second outlet end,the first outlet end and the second outlet end are respectively provided with an electromagnetic valve to control the opening or closing of the the first outlet end and the second outlet end.The invention provides an electronic intelligent water outlet control system, which is compact and can adjust the water flow and water temperature accurately, and is convenient for users to use.

The foregoing is intended to be a preferred embodiment of the present invention, but the scope of the invention is not limited thereto, and any person skilled in the art will be able to easily think of changes within the scope of the invention disclosed. Substitutions are to be covered within the scope of the present invention. Accordingly, the scope of protection of the present invention should be determined by the scope of the claims.

**Claims**

1. An electronic intelligent water outlet control system, wherein comprising: a controller and a control panel; said controller comprises a cold water inlet end and hot water inlet end, the cold water and the hot water flow through said cold water inlet end and hot water inlet end respectively into two chambers of a pressure balance valve;

   the two chambers of the pressure balance valve respectively flow into the mixing water chamber of the temperature control valve through the cold water inlet and the hot water inlet, the temperature control valve is regulated by the first stepping motor to regulate the water passing area of the cold water inlet and hot water inlet so as to adjust the proportion of hot and cold water in the mixing water chamber;

   the temperature control valve further comprises a mixed water outlet connected to the flow control valve; the flow control valve comprises a pilot valve and a second stepping motor, the second stepping motor adjusts the water passing area of the pilot valve outlet;

   the pilot valve outlet is connected to the first water outlet end and the second outlet end; the first outlet end and the second outlet end are respectively provided with an electromagnetic valve to control the opening or closing of the the first outlet end and the second outlet end;

   the control panel sends a water terminal selection signal to the controller, the controller generates an electrical signal to control the open of the first water outlet terminal or the second water outlet terminal ; the control panel also sends a temperature adjustment signal and the flow rate adjustment signal to the the controller, the controller generates an electrical signal to control the first stepping motor ,the second stepping motor is rotated an angle so that the outlet water temperature of the mixed water outlet of the temperature control valve is increased or decreased and the outlet water flow of the flow control valve is increased or decreased;

   the cold water inlet and the hot water inlet are respectively provided with a temperature sensor for detecting the water temperature of the cold water and the hot water. When the controller receives the temperature adjustment signal; the proportion of the cold water and the hot water is calculated according to the water temperature of the cold water and the hot water when the temperature of the mixed water outlet water reach the requirement of the temperature regulation signal ,and then the first stepper motor rotation corresponding angle is in control;

   the proportion of cold water and hot water is calculated as follows:

   $$M_{cold} \,/\, M_{hot} = (T_{hot}\text{-}T_{out}) \,/\, (T_{out}\text{-}T_{cold})$$

   wherein $M_{cold}$ and $M_{hot}$ is the total amount of cold water inlet and the total amount of hot water inlet, $T_{hot}$, $T_{cold}$ and $T_{out}$ are respectively the temperature of the hot water inlet , the temperature of the cold water inlet and the temperature of mixed water outlet required by the temperature regulation signal .

2. The electronic intelligent water outlet control system according to claim 1, wherein said temperature control valve comprises a nested set regulating member and a nested set fixing member, said regulating member is moved along the axial direction of the fixing member with respect to the fixing member by the action of the first step motor ;and the side walls of the regulating member and the fixing member are provided with two water passages; and the water inlet of the regulating member and the fixing member are communicated with each other to form the cold water inlet and the hot water inlet; and when the regulating member is moved in the axial direction with respect to the fixing member, the area where the water inlet of the regulating member and the water inlet of the fixing member coincide are changed so that the water passing area of the cold water inlet and the hot water inlet changes.

3. The electronic intelligent water outlet control system according to claim 1 and/or 2, wherein said pressure balance valve includes a stationary member and a moving member,the stationary member has a cavity , the side wall of the stationary member has an opening communicating with the cavity ;said moving member is disposed within the cavity, divide the cavity into said two chambers,and an over-flow port is formed between the upper end of the moving member and the upper surface of the open end, and an over-flow port is formed between the lower end of the moving member and the lower surface of the open end;
when the cold water and the hot water flow into the two chambers, the cold water and the hot water in the chamber respectively apply pressure in the opposite direction to the moving member, and when the two pressures are not equal, the moving member moves to the chamber which the water pressure is lower; the over-flow port of the chamber with a large pressure becomes smaller and the over-flow port of the chamber with a small pressure becomes larger, so that the two chambers are returned to the equilibrium state.

4. The electronic intelligent water outlet control system according to any one or more of claims 1 to 3, wherein said pilot valve includes a water blocking plug disposed coaxially with the water outlet of said pilot valve, when said second stepping motor is rotated, the second stepping motor output shaft is moved axially toward the direction of the water blocking plug, and the ejection force generated between the second stepping motor and the water blocking plug urges the water blocking plug to extend axially into the water outlet; the outer periphery of said water blocking plug has a circular mesa and the distance between said circular mesa and said water outlet is reduced as the water blocking plug extends into said water outlet so that the water passing area of said water outlet is reduced.

5. The electronic intelligent water outlet control system according to any one or more of claims 1 to 4, wherein the mixed water outlet is also provided with a temperature sensor

6. The electronic intelligent control system according to any one or more of claims 1 to 5, wherein said controller is mounted outside and comprises an outer housing; said control panel is provided in the surface of the outer housing.

7. The electronic intelligent water outlet control system according to claim 6, wherein the housing is further provided with a built-in power supply for supplying power to the controller and the control panel.

8. The electronic intelligent water outlet control system according to any one or more of claims 1 to 5, wherein said controller is mounted in a concealed manner, the control panel is provided separately from the controller, and the controller and the control panel are electrically connected by wires.

9. The electronic intelligent water outlet control system according to claim 8, wherein said controller is electrically connected to the city electricity.

FIG.1

131

131

132

133

**FIG.2**

FIG.3

15

142

141

146

144

143

145

**FIG.4**

FIG.5

FIG.6

FIG.7

FIG.8

Europäisches
Patentamt

European
Patent Office

Office européen
des brevets

# EUROPEAN SEARCH REPORT

**Application Number**

EP 18 00 0082

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 136 278 A1 (NOBILI FABRIZIO [CH]) 23 December 2009 (2009-12-23) * paragraphs [0001] - [0002], [0013], [0015], [0025], [0040], [0042] - [0044]; figures 4, 5 * ----- | 1,2,5 | INV. G05D23/13 E03C1/05 E03C1/00 |
| X | EP 0 358 173 A2 (MATSUSHITA ELECTRIC IND CO LTD [JP]) 14 March 1990 (1990-03-14) * column 4, line 46 - column 5, line 42; figures 2-4 * ----- | 1,2,5 | |

**TECHNICAL FIELDS SEARCHED (IPC)**

E03C
G05D

~~The present search report has been drawn up for all claims~~

| Place of search | Date of completion of the search | Examiner |
|---|---|---|
| Munich | 6 July 2018 | Etienne, Yves |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................................................

& : member of the same patent family, corresponding
document

EPO FORM 1503 03.82 (P04C01)

Europäisches
Patentamt

European
Patent Office

Office européen
des brevets

Application Number

EP 18 00 0082

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 5

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1, 2, 5

    Temperature control valve
                ---

2. claim: 3

    Pressure balancing valve
                ---

3. claim: 4

    Flow control valve
                ---

4. claims: 6, 7

    Stand alone electronic intelligent water outlet control system
                ---

5. claims: 8, 9

    Assemblage characteristics
                ---

## ANNEX TO THE EUROPEAN SEARCH REPORT
## ON EUROPEAN PATENT APPLICATION NO.

EP 18 00 0082

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2018

| Patent document cited in search report | | Publication date | Patent family member(s) | | Publication date |
|---|---|---|---|---|---|
| EP 2136278 | A1 | 23-12-2009 | NONE | | |
| EP 0358173 | A2 | 14-03-1990 | CA | 1307571 C | 15-09-1992 |
| | | | DE | 68926370 T2 | 14-11-1996 |
| | | | EP | 0358173 A2 | 14-03-1990 |
| | | | FI | 101108 B | 15-04-1998 |
| | | | US | 5058804 A | 22-10-1991 |

EPO FORM P0459

For more details about this annex : see Official Journal of the European Patent Office, No. 12/82